# EUROPÄISCHE PATENTSCHRIFT

(11) **EP 2 913 174 B1**
(45) Veröffentlichungstag und Bekanntmachung des Hinweises auf die Patenterteilung: **18.07.2018**
(21) Anmeldenummer: 15155048.0
(22) Anmeldetag: 13.02.2015
(51) Int. Cl.: B29C 49/48, B29C 49/46, B29C 49/06, B29C 49/36, B29D 22/00, B29C 49/70, B29L 31/00

(54) **Blasformmaschine mit Zentrierung des Blasformbodens**
Blow-moulding machine with centering of the blow-moulding base
Machine de formage par soufflage à centrage du fond de moule de soufflage

(30) Priorität: 13.02.2014 DE 102014101853
(43) Veröffentlichungstag der Anmeldung: 02.09.2015
(73) Patentinhaber: Krones AG, 93073 Neutraubling (DE)
(72) Erfinder: Geltinger, Florian, 93073 Neutraubling (DE); Folger, Kevin, 93073 Neutraubling (DE); Spitzer, Thomas, 93073 Neutraubling (DE)
(74) Vertreter: Bittner, Bernhard

(56) Entgegenhaltungen:
- DE-U1-202011 109 976
- US-A- 5 255 889
- US-A1- 2009 028 976
- US-A1- 2011 129 558

## Beschreibung

Die vorliegende Erfindung bezieht sich auf eine Vorrichtung und ein Verfahren zum Umformen von Kunststoffvorformlingen zu Kunststoffbehältnissen, wie insbesondere, aber nicht ausschließlich, Kunststoffflaschen. Derartige Vorrichtungen und Verfahren sind aus dem Stand der Technik seit langem bekannt. Dabei werden Kunststoffvorformlinge üblicherweise erwärmt und anschließend in eine Blasform eingegeben. In dieser Blasform werden die Kunststoffvorformlinge durch Beaufschlagung mit Druckluft zu den Kunststoffflaschen umgeformt.

Diese Blasformen setzen sich dabei üblicherweise aus mehreren Bestandteilen zusammen, beispielsweise aus Seitenteilen und aus einem Bodenteil, welche gemeinsam den Hohlraum begrenzen, innerhalb dessen die Kunststoffvorformlinge umgeformt werden. Zum Expandieren der Kunststoffvorformlinge ist dabei üblicherweise ein erheblicher Flascheninnendruck erforderlich. Durch diesen Flascheninnendruck beim Ausformen der Kunststoffbehältnisse entstehen auch sehr hohe Kräfte bis hin zu 50 kN, die auf die Bodenform wirken und diese in axialer Richtung (im Folgenden auch als Längsrichtung des Kunststoffvorformlings bezeichnet) wegdrücken.

Um diese Kräfte aufzunehmen, werden zwischen der Bodenform bzw. dem Bodenteil der Blasformeinrichtung und den (bewegten) Seitenteilen komplementäre, formschlüssige Zentrierteile mit prismatischer Kontur eingesetzt. Die Kontaktfläche, über welche die Kraft übertragen wird, ist damit schräg (prismatisch) ausgeführt. Beim Schließen und Öffnen des Formträgers greifen diese Flächen ineinander, wodurch das Bodenteil aufgrund der Schräge aktiv nach oben gezogen wird.
Durch diese beim Öffnen und Schließen der Blasform stattfindende Gleitbewegung entsteht jedoch Mikroverschleiß. Dieser Mikroverschleiß wird durch zyklisches Schmieren unterbunden. Allerdings ist man in jüngerer Zeit auch bestrebt, derartige Blasmaschinen hygienisch oder gegebenenfalls sogar steril auszugestalten. Derartige Vorrichtungen und Verfahren sind zum Beispiel in den Druckschriften US-A-5255889 und US2011/0129558A1 beschrieben. Ein möglicher Ansatz besteht darin, einen selbstschmierenden Kunststoff zu verwenden, aus dem die jeweils komplementären Bauteile hergestellt sind. Allerdings kann auch hierdurch ein auftretender Verschleiß nicht vollständig ausgeschlossen werden. Überdies tritt durch die besagte Berührung zwischen den Schrägflächen auch ein nicht unerhebliches Kontaktgeräusch auf.
Daneben ist auch die passgenaue Fertigung der jeweils schrägen Flächen, insbesondere in der Rundung, aufwendig und teuer.
Der vorliegenden Erfindung liegt daher die Aufgabe zugrunde, die Verschleißanfälligkeit derartiger Maschinen zu reduzieren. Daneben soll auch der Herstellungsaufwand für derartige Maschinen gesenkt werden. Diese Aufgaben werden erfindungsgemäß durch die Gegenstände der unabhängigen Patentansprüche erreicht. Vorteilhafte Ausführungsformen und Weiterbildungen sind Gegenstand der Unteransprüche.
Eine erfindungsgemäße Vorrichtung zum Umformen von Kunststoffvorformlingen zu Kunststoffbehältnissen weist eine Blasformeinrichtung auf, welche einen Hohlraum ausbildet, innerhalb dessen die Kunststoffvorformlinge zu den Kunststoffbehältnissen und insbesondere Kunststoffflaschen expandierbar sind. Dabei weist die Blasformeinrichtung ein erstes Blasformteil (und insbesondere ein erstes Seitenteil) und ein zweites Blasformteil (insbesondere ein zweites Seitenteil) sowie ein Bodenteil, welche bezüglich einander beweglich sind, auf,
um die Blasformeinrichtung zu öffnen oder zu schließen. Weiterhin ist eine Blasformträgereinrichtung zum Halten der Blasformeinrichtung vorgesehen, wobei die Blasformträgereinrichtung ein erstes Trägerteil zum Halten des ersten Blasformteils und ein zweites Trägerteil zum Halten des zweiten Blasformteils aufweist. Weiterhin weist die Vorrichtung ein drittes Trägerteil zum Halten des Bodenteils auf und daneben weist die Vorrichtung einen Zentrier
mechanismus auf, um das Bodenteil wenigstens gegenüber den Blasformteilen zu zentrieren.

Dabei weist dieser Zentriermechanismus ein erstes als Vorsprung ausgebildetes Eingriffselement auf, welches bezüglich eines zweiten als Ausnehmung ausgebildeten Eingriffselements bewegbar ist, wobei eines dieser Eingriffselemente an dem dritten Trägerteil angeordnet ist und wobei weiterhin die Ausnehmung und der Vorsprung derart ausgebildet sind, dass der Vorsprung bei einer Zustellbewegung in die Ausnehmung eingreifen kann. Weiterhin stehen wenigstens zeitweise die Eingriffselemente über eine Kontaktfläche derart in Kontakt, dass durch diesen Kontakt das Bodenteil in einer Längsrichtung der Kunststoffvorformlinge abgestützt wird.

Erfindungsgemäß sind die Eingriffselemente derart angeordnet, dass sie zumindest zeitweise während einer Schließbewegung der Blasformeinrichtung nicht entlang der Kontaktfläche miteinander in Kontakt bringbar sind, bzw. in Kontakt miteinander gelangen.

Während im Stand der Technik vorgeschlagen wird, dass durch die besagten Schrägflächen gerade bei einer Zustellbewegung der Seitenteile der Blasform auch das Bodenteil in Richtung der beiden anderen Blasformteile gedrängt wird, wird nunmehr im Gegenteil vorgeschlagen, dass insbesondere auch während der Öffnungs- und Schließbewegung ein derartiger Kontakt zwischen Schrägflächen nicht stattfindet. Auf diese Weise wird die oben erwähnte Abnutzung vermindert.

Bei einer bevorzugten Ausführungsform ist die Ausnehmung an dem Träger des Bodenteils ausgebildet und der Vorsprung umgekehrt greift in diese Ausnehmung ein. Es wäre jedoch auch umgekehrt denkbar, dass an dem Bodenteil der Vorsprung ausgebildet ist und die Ausnehmung das entsprechende komplementäre Eingriffselement ist. Unter einer Ausnehmung wird bevorzugt zwar eine Ausnehmung verstanden, welche den Vorsprung mit wenigstens drei zueinander senkrecht oder in einem von 0° unterschiedlichen Winkel stehenden Richtung umgibt. Es kann sich jedoch bei der Ausnehmung auch um ein stufenartiges Gebilde handeln, wobei der Vorsprung beispielsweise an einem Stufenabschnitt dieser Ausnehmung abgestützt wird.

Bei einer weiteren vorteilhaften Ausführungsform weist die Vorrichtung auch eine Reckstange auf, welche in die Kunststoffvorformlinge einführbar ist. Diese Reckstange dient dabei insbesondere zum Dehnen des Kunststoffvorformlings in seiner Längsrichtung.

Bei einer weiteren vorteilhaften Ausführungsform weist die Vorrichtung auch eine Beaufschlagungseinrichtung auf, welche dazu dient, um den Kunststoffvorformling während des Expansionsvorgangs mit einem gasförmigen Medium und insbesondere mit Blasluft zu beaufschlagen.

Bei einer weiteren vorteilhaften Ausführungsform weist die Vorrichtung auch eine Zustelleinrichtung auf, welche das Bodenteil auf die beiden Blasformteile zustellt.

Weiterhin ist auch eine Bewegungseinrichtung vorgesehen, welche die Eingriffselemente aufeinander zustellt und insbesondere die Vorsprünge in die Ausnehmung hineinführt. Dabei ist es möglich, dass diese Eingriffselemente an den Seitenteilen des Blasformträgers angeordnet sind und mit diesen bewegt werden. Es wäre jedoch auch denkbar, dass die besagten Eingriffselemente bewegbar gegenüber den Blasformträgerteilen sind und auf diese Weise auch noch ein aktives Zustellen des Bodenteils an die Seitenteile der Blasformeinrichtung bewirken können. Bevorzugt dient, wie oben erwähnt, das Eingriffselement auch als Zentrierelement. Zu diesem Zweck sind bevorzugt zwei Eingriffselemente vorgesehen, welche von zwei unterschiedlichen und insbesondere von zwei gegenüberliegenden Seiten her an die Ausnehmung bzw. an den Träger des Bodenteils herangeführt werden. Vorteilhaft ist der Vorsprung derart ausgestaltet, dass er gegenüber der Ausnehmung ein vorgegebenes Spiel hat. Dies bedeutet, dass sich bevorzugt der Vorsprung innerhalb der Ausnehmung um einen bestimmten Bereich, insbesondere in der Längsrichtung der Kunststoffvorformlinge, bewegen kann.

Vorteilhaft sind die Eingriffselemente derart angeordnet und/oder ausgebildet, dass während der gesamten Schließbewegung und bevorzugt auch während der Öffnungsbewegung kein Kontakt zwischen den Eingriffselementen stattfindet und insbesondere kein Kontakt entlang der besagten ersten Kontaktfläche. Verfahrensseitig erfolgt erst nach erfolgtem Schließvorgang ein Zustellen der beiden Eingriffselemente aufeinander zu (insbesondere zum Ausbilden einer Kontaktfläche).

Im Gegensatz zum Stand der Technik wird daher das Bodenteil bzw. die Bodenform nicht mehr über die insbesondere an den Formhälften bzw. an den Seitenteilen angebrachten konischen Zentrierungen angehoben, sondern durch ein weiteres Antriebsmittel, wie beispielsweise Rollen oder eine Kurve, höher positioniert. Durch das aktive höher Positionieren des Bodenteils findet bevorzugt in der Öffnungs- und Schließbewegung kein Kontakt zwischen diesen Bauteilen statt. Der Abstand dieser beiden Bauteile während Öffnungs- und/oder Schließbewegung liegt dabei bevorzugt zwischen 0,01 mm und 1 mm, bevorzugt zwischen 0,02 mm und 0,8 mm, bevorzugt zwischen 0,05 mm und 0,5 mm und besonders bevorzugt bei ca. 0,1 mm. Dieser Abstand hat sich als besonders günstig erwiesen, um einerseits im laufenden Betrieb sicher einen Kontakt zu vermeiden und um andererseits jedoch kein allzu großes Spiel zwischen dem Bodenteil und den Eingriffselementen zu gestatten.

Die miteinander zusammenwirkenden Flächen können dabei horizontal, bzw. plan ausgeführt werden. Nachdem der Formträger bzw. die Blasformträgereinrichtung geöffnet bzw. geschlossen wird, legt sich bevorzugt das Bodenteil oder die Bodenzentrierung wieder an. Auf diese Weise wird der Spalt zwischen den Eingriffselementen geschlossen.

Falls die Vorrichtung eine zentrale Bodenkurve aufweist, stellt dies kein Problem dar, da dann die Bodenkurve nicht mehr in Eingriff mit derartigen Zustellelementen steht. Durch die Kopplung einer Bodenansteuerung mit der Formträgerbewegung ist es bevorzugt denkbar, die besagte untere Kurvenrolle beweglich zu lagern, um auch bei Auftreten eines Blasdrucks ausweichen zu können.

Bevorzugt bewegen sich die Eingriffselemente in dem Zeitraum zwischen dem vollständigen Schließen der Blasformeinrichtung und dem Beginn der Öffnungsbewegung der Blasformeinrichtung wenigstens zeitweise bezüglich einander, insbesondere in einer Längsrichtung der Kunststoffbehältnisse.

Bevorzugt nimmt daher die Zentriereinrichtung auch die aus dem Behältnisinnendruck entstehenden Kräfte auf und leitet sie insbesondere an weitere Elemente, wie beispielsweise die Formschalen, die Formträgerschalen, den Formträger oder andere an den Formträgerhälften befestigte Bauteile ab. Weiterhin ist jedoch, wie oben erwähnt, diese Bodenzentrierung während der Schließbewegung der Blasformträgerteile bzw. der Blasformeinrichtungen derart positioniert, dass sie insbesondere bis zum Ende der Schließbewegung bzw. bei Beginn der Öffnungsbewegung keinen Kontakt mit den oben genannten Bauteilen bzw. den dortigen Gegenelementen hat.

Mit anderen Worten ist bevorzugt ein Formspalt zwischen den Eingriffselementen während der Schließbewegung größer als während des Blasvorgangs.

Bei einer weiteren vorteilhaften Ausführungsform ist die Umformungseinrichtung an einen beweglichen Träger angeordnet und insbesondere an einen drehbaren Träger bzw. einem Blasrad.

Vorteilhaft weist die Vorrichtung auch einen Reinraum auf, innerhalb dessen die Kunststoffvorformlinge zu den Kunststoffbehältnissen expandiert werden. Die vorliegende Erfindung eignet sich insbesondere für derartige Reinraumanwendungen, da sie auf Schmiermittel verzichtet, von denen generell eine Gefahr für einen Reinraum bzw. für die Sterilhaltung eines Reinraums ausgeht. Vorteilhaft sind mehrere der besagten Umformungseinrichtungen an den besagten drehbaren Träger angeordnet.

Bei einer weiteren vorteilhaften Ausführungsform weist dieser Reinraum mehrere den Reinraum begrenzende Wandungen auf. Vorteilhaft sind dabei wenigstens zwei dieser Wandungen beweglich gegenüber einander ausgestaltet. Bevorzugt ist eine der Wandungen drehbeweglich gegenüber der anderen Wandung ausgebildet und zwar insbesondere drehbeweglich bezüglich einer Rotationsachse des Blasrads.

Bei einer weiteren vorteilhaften Ausführungsform ist auch eine Dichtungseinrichtung vorgesehen, welche den Reinraum bzw. Sterilraum gegenüber einer (unsterilen) Umgebung abdichtet.

Bei einer weiteren vorteilhaften Ausführungsform handelt es sich bei dieser Dichtungseinrichtung um eine Gasdichtung und/oder ein sogenanntes Wasserschloss.

Bei einer weiteren vorteilhaften Ausführungsform ist das Bodenteil wenigstens zeitweise während der Schließbewegung der Blasformeinrichtung näher an den Seitenteilen (d.h. der erste und zweiten Blasformeinrichtung) angeordnet als während des eigentlichen Umformungsvorgangs. Dies bedeutet, dass zunächst die Blasform geschlossen wird und anschließend das Bodenteil der Blasform an die Zentrierung bzw. deren Vorsprung angedrückt wird. Im Allgemeinen ist daher das Bodenteil während eines Öffnungs- und/oder Schließvorgangs bevorzugt höher angeordnet als während des Umformungsvorgangs.

Vorteilhaft ist das Bodenteil während der gesamten Schließbewegung näher an den Seitenteilen bzw. den Blasformteilen angeordnet als während des Umformungsvorgangs. Vorteilhaft wird, wie gesagt, erst nach dem Schließvorgang das Bodenteil (geringfügig) von den Seitenteilen entfernt.

Vorteilhaft liegt ein Abstand zwischen dem Bodenteil der Blasformeinrichtung und den Seitenteilen bzw. den oben erwähnten Blasformteilen - insbesondere auch während des Blasvorgangs - zwischen 0,01 mm und 1 mm, bevorzugt zwischen 0,02 mm und 0,8 mm, bevorzugt zwischen 0,05 mm und 0,5 mm und besonders bevorzugt bei ca. 0,1 mm. Damit ist bevorzugt ein Formspalt zwischen den Seitenteilen und den Bodenteilen während der Schließbewegung wenigstens zeitweise kleiner als während des Blasvorgangs.

Bei einer weiteren vorteilhaften Ausführungsform weist die Vorrichtung eine Antriebseinrichtung auf, um ein Eingriffselement gegenüber dem anderen Eingriffselement in der Längsrichtung der Kunststoffvorformlinge zu bewegen. Bevorzugt handelt es sich, wie oben erwähnt, hierbei um eine Antriebseinrichtung, welche das Bodenteil - insbesondere in einer Längsrichtung der Kunststoffvorformlinge - bewegt.

Bei einer weiteren vorteilhaften Ausführungsform weist diese Antriebseinrichtung eine stationär angeordnete Führungskurve auf. Es wäre jedoch auch die Verwendung von elektrischen, magnetischen, hydraulischen oder pneumatischen Antrieben denkbar.

Bei einer weiteren vorteilhaften Ausführungsform verläuft eine Kontaktfläche bzw. ein Formspalt zwischen den Eingriffselementen in einem geschlossenen Zustand der Blasformeinrichtung in einer im Wesentlichen horizontalen Richtung. Dies bedeutet, dass sich bevorzugt die besagte Kontaktfläche in einer horizontalen Ebene erstreckt. Auf diese Weise kann der Formspalt sehr gering gehalten werden, da er durch die Öffnung- bzw. Schließbewegung selbst nicht beeinflusst wird. Unter im Wesentlichen horizontal wird dabei verstanden, dass eine Ebene dieser Kontaktfläche gegenüber einer horizontalen Ebene um weniger als 10°, bevorzugt um weniger als 5°und besonders bevorzugt um weniger als 3°, bevorzugt um weniger als 2°, bevorzugt um weniger als 1° abweicht. Vorteilhaft handelt es sich um eine genau horizontale Ausrichtung.

Damit sind die Bodenzentrierung und deren Gegenstück bevorzugt derart ausgebildet, dass die Kontur, welche die Kraft aufnimmt, im Wesentlichen horizontal ausgebildet ist.

Bevorzugt erstreckt sich ein Eingriffsbereich der Eingriffselemente bezüglich einer Längsrichtung der Kunststoffvorformlinge entlang eines Umfangswinkels, der kleiner ist als 150°. Bevorzugt ist dieser Umfangswinkel kleiner als 120° und besonders bevorzugt kleiner als 100°. Mit anderen Worten weist ein Überdeckungswinkel, in dessen Bereich die Bodenzentrierung mit den jeweiligen Gegenstücken in Kontakt steht, einen Winkel von weniger als 150°auf.

Bei einer weiteren vorteilhaften Ausführungsform weisen die komplementären Querschnittskonturen der Eingriffselemente, das heißt von der Bodenzentrierung und dem Gegenstück eine derartige Ausbildung auf, dass diejenigen Bereiche, welche der die Kraft aufnehmenden Oberfläche entgegengesetzt sind, beim Aufbringen des Behältnisinnendrucks einen Abstand zu den jeweiligen komplementären Gegenstücken aufweisen. Dies bedeutet, wie oben erwähnt, dass die Querschnittskonturen bezüglich einander ein Spiel aufweisen.

Bei einer weiteren vorteilhaften Ausführungsform ist der Antrieb, der das Bodenteil bewegt bzw. ansteuert, bzw. wieder das Bodenteil aktiv absenkt, um eine Anlage der Eingriffselemente aneinander zu erreichen, spätestens zu dem Zeitpunkt aktiv, in dem ein Behältnisinnendruck auf das Bodenteil zu wirken beginnt. Vorteilhaft ist der besagte Antrieb, der das Bodenteil bewegt bzw. ansteuert bzw. die Bodenform anhebt, spätestens ab dem Zeitpunkt nicht mehr aktiv, bevor sich die Blasformträgerteile zu öffnen beginnen. Vorteilhaft ist eine Antriebseinrichtung zum Bewegen der Bodenform während des Blasformvorgangs bzw. während ein Flascheninnendruck anliegt, nicht mit dem Träger des Bodenteils bzw. dem Bodenteil gekoppelt.

Bei einer weiteren vorteilhaften Ausführungsform ist es auch denkbar, dass die Antriebseinrichtung, während der Behältnisinnendruck an dem Bodenteil der Blasformeinrichtung anliegt, das Bodenteil in einer erhöhten Position hält. Dabei sind jedoch bevorzugt Elemente vorgesehen, die in der Belastungskette zwischen dem Bodenteil und der Antriebseinrichtung liegen, die sich infolge der Krafteinwirkung durch den Behältnisinnendruck definiert verformen und so eine Anlage des Bodenteils an den jeweiligen Eingriffselementen bzw. den Gegenstücken der Kraftübertragung ermöglichen.

Vorteilhaft besteht während des Umformvorgangs zwischen wenigstens einem Seitenteil und dem Bodenteil ein Formspalt, der sich quer zu der Längsrichtung der Kunststoffvorformlinge erstreckt.

Die vorliegende Erfindung bezieht sich weiterhin auf ein Verfahren zum Umformen von Kunststoffvorformlingen zu Kunststoffbehältnissen und insbesondere zu Kunststoffflaschen. Dabei werden die Kunststoffvorformlinge in eine Blasformeinrichtung eingebracht und in dieser Blasformeinrichtung durch Beaufschlagung mit einem fließfähigen und insbesondere einem gasförmigen Medium zu den Kunststoffbehältnissen umgeformt. Die Blasformeinrichtung weist dabei wenigstens ein erstes Blasformteil und ein zweites Blasformteil, insbesondere zwei Seitenteile, sowie ein Bodenteil auf, welche gemeinsam einen Hohlraum ausbilden, innerhalb dessen die Kunststoffvorformlinge zu den Kunststoffbehältnissen ausgebildet werden.

Weiterhin werden für einen Schließvorgag der Blasformeinrichtung die an den Trägerteilen angeordneten Blasformteile aufeinander zugestellt, wobei weiterhin das Bodenteil gegenüber den Blasformteilen zentriert wird und wobei für diesen Zentriervorgang ein erstes als Vorsprung ausgebildetes Eingriffselement bezüglich eines zweiten als Ausnehmung ausgebildeten Eingriffselements bewegt wird und eines dieser Eingriffselemente an einem dritten Trägerteil angeordnet ist, welches zum Halten des Bodenteils dient. Weiterhin sind die Ausnehmung und er Vorsprung derart ausgebildet, dass der Vorsprung bei einer Zustellbewegung in die Ausnehmung eingreift, wobei wenigstens zeitweise während eines Umformvorgangs die Eingriffselemente über eine erste Kontaktfläche in Kontakt stehen und durch diesen Kontakt das Bodenteil in einer Längsrichtung der Kunststoffvorformlinge abgestützt wird.

Erfindungsgemäß gelangen die besagten Eingriffselemente zumindest zeitweise während einer Schließbewegung der Blasformeinrichtung und/oder einer Öffnungsbewegung der Blasformeinrichtung nicht entlang der Kontaktfläche miteinander in Kontakt. Vorteilhaft gelangen die Eingriffselemente während dieser Schließbewegung bzw. jedenfalls bis zum Ende der Schließbewegung nicht entlang der Kontaktfläche in Kontakt miteinander.

Vorteilhaft gelangen die Eingriffselemente zumindest zeitweise während einer Schließbewegung der Blasformeinrichtung und/oder einer Öffnungsbewegung der Blasformeinrichtung nicht miteinander in Kontakt

Es wird daher auch verfahrensseitig vorgeschlagen, dass während der Schließbewegung und bevorzugt auch während der Öffnungsbewegung ein Kontaktieren der Eingriffselemente und eine damit einhergehende Abnutzung vermieden werden.

Bei einer weiteren vorteilhaften Ausführungsform ist ein Abstand zwischen den Bodenteilen und den Seitenteilen nach Beginn eines Schließvorgangs der Blasformeinrichtung und vor Beginn eines Öffnungsvorgangs der Blasformeinrichtung wenigstens zeitweise vergrößert. Dies bedeutet, dass dieser Abstand während des besagten Umformungsvorgangs wenigstens zeitweise größer ist als während eines Öffnungsvorgangs und/oder während eines Schließvorgangs. Damit wird, wie oben erwähnt, ein Formspalt zwischen dem Bodenteil und den Blasformteilen bzw. Seitenteilen während des Blasformvorgangs ausgebildet bzw. vergrößert.

Bei einer weiteren vorteilhaften Ausführungsform werden die Eingriffselemente nach Beginn eines Schließvorgangs der Blasformeinrichtung und vor dem Beginn eines Öffnungsvorgangs der Blasformeinrichtung bezüglich einander in einer Längsrichtung des zu expandierenden Kunststoffvorformlings bewegt.

Weitere Vorteile und Ausführungsformen ergeben sich aus den beigefügten Zeichnungen. Darin zeigen:
- Fig. 1: Eine Darstellung einer Anlage zum Herstellen von Kunststoffbehältnissen;
- Fig. 2: eine Darstellung einer Umformungsstation innerhalb eines Reinraums;
- Fig. 3a, 3b: zwei Darstellungen von Blasformeinrichtungen nach dem Stand der Technik;
- Fig. 4a, 4b: zwei Darstellungen zur Veranschaulichung von erfindungsgemäßen Blasformeinrichtungen; und
- Fig. 5a - 5d: vier Darstellungen zur Veranschaulichung eines Schließprozesses einer Blasformeinrichtung.

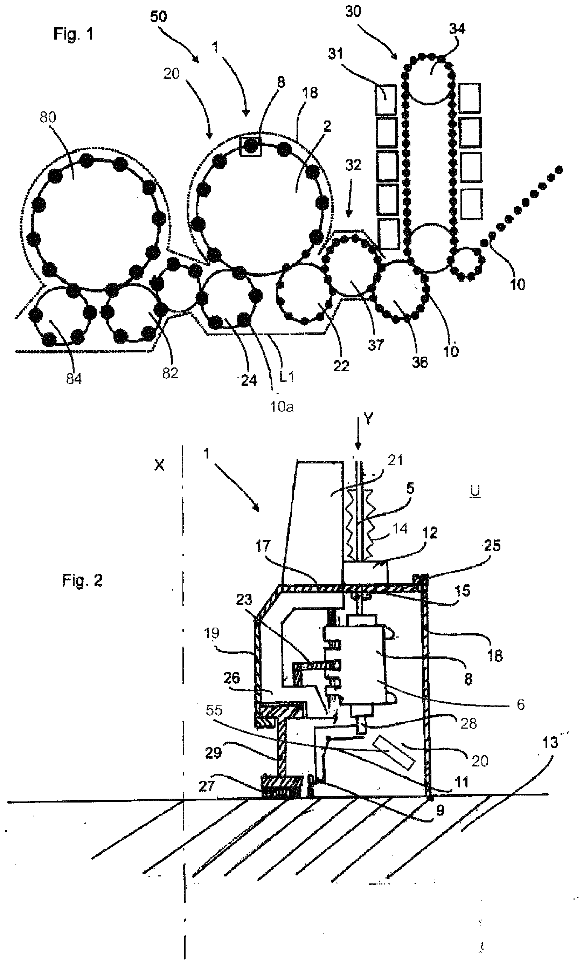

Figur 1 zeigt eine schematische Darstellung einer Anlage zum Herstellen von Kunststoffbehältnissen. Diese Anlage 50 weist eine Heizeinrichtung 30 auf, in der Kunststoffvorformlinge 10 erwärmt werden. Dabei werden diese Kunststoffvorformlinge 10 mittels einer Transporteinrichtung 34, wie hier einer umlaufenden Kette, durch diese Heizeinrichtung 30 geführt und dabei mit einer Vielzahl von Heizelementen 31 erwärmt. An diese Heizeinrichtung 30 schließt sich eine Übergabeeinheit 36 an, welche die Vorformlinge 10 an eine Sterilisationseinrichtung 32 übergibt. Diese Sterilisationseinrichtung 32 weist dabei hier ebenfalls ein Transportrad 37 auf und an diesem Transportrad 37 oder auch stationär können Sterilisationselemente angeordnet sein. In diesem Bereich ist beispielsweise eine Sterilisation durch Wasserstoffperoxidgas oder auch durch elektromagnetische Strahlung möglich. Insbesondere wird in diesem Bereich eine Innensterilisation der Vorformlinge durchgeführt.

Das Bezugszeichen 20 bezeichnet in seiner Gesamtheit einen Reinraum, dessen Außenbegrenzungen hier durch die punktierte Linie L1 angedeutet sind. In einer weiteren bevorzugten Ausführungsform ist der Reinraum 20 nicht nur im Bereich des Transportrads 2 und Befüllungseinrichtung 80 angeordnet, sondern beginnt möglicherweise schon im Bereich der Heizeinrichtung 30, der Sterilisationseinrichtung 32, der Kunststoffvorformlingzuführung und/oder der Kunststoffvorformlingherstellung. Man erkennt, dass dieser Reinraum 20 in dem Bereich der Sterilisationseinheit 32 beginnt. In diesem Bereich können Schleuseneinrichtungen vorgesehen sein, um die Kunststoffvorformlinge in den Reinraum 20 einzuführen, ohne dass dabei zu viel Gas innerhalb des Reinraums strömt und so verloren geht.

Der Reinraum ist, wie durch die gestrichelte Linie L angedeutet, an die Außengestalt der einzelnen Anlagenkomponenten angepasst. Auf diese Weise kann das Volumen des Reinraums reduziert werden.

Das Bezugszeichen 1 bezeichnet in ihrer Gesamtheit eine Umformungsvorrichtung, bei der an einem Transportrad 2 eine Vielzahl von Blasstationen bzw. Umformungsstationen 8 angeordnet ist, wobei hier lediglich einer dieser Blasstationen 8 dargestellt ist. Mit diesen Blasstationen 8 werden die Kunststoffvorformlinge 10 zu Behältnissen 10a expandiert. Obwohl hier nicht detailliert gezeigt, befindet sich nicht der gesamte Bereich des Transporteinrichtung 2 innerhalb des Reinraums 20, sondern der Reinraum 20 bzw. Isolator ist gewissermaßen als Mini-Isolator innerhalb der gesamten Vorrichtung realisiert. So wäre es möglich, dass der Reinraum zumindest im Bereich der Umformungsvorrichtung 1 kanalartig ausgeführt ist.

Das Bezugszeichen 22 bezieht sich auf eine Zuführeinrichtung, welche die Vorformlinge an die Umformungseinrichtung 1 übergibt und das Bezugszeichen 24 auf eine Abführeinrichtung, welche die hergestellten Kunststoffbehältnisse 20 von der Umformungsvorrichtung 1 abführt. Man erkennt, dass der Reinraum 20 in dem Bereich der Zuführeinrichtung 22 und der Abführeinrichtung 24 jeweils Ausnehmungen aufweist, welche diese Einrichtungen 22, 24 aufnehmen. Auf diese Weise kann in besonders vorteilhafter Weise eine Übergabe der Kunststoffvorformlinge 10 an die Umformungsvorrichtung 1 bzw. eine Übernahme der Kunststoffbehältnisse 10a von der Umformungsvorrichtung 1 erreicht werden.

Mit einer Übergabeeinheit 82 werden die expandierten Kunststoffbehältnisse an eine Befüllungseinrichtung 80 übergeben und von dieser Befüllungseinrichtung 80 anschließend über eine weitere Transporteinheit 44 abgeführt. Dabei befindet sich auch die Befüllungseinrichtung 80 innerhalb des besagten Reinraums 20. Auch im Falle der Befüllungseinrichtung wäre es möglich, dass nicht die gesamte Befüllungseinrichtung 80 mit beispielsweise einem Reservoir für ein Getränk vollständig innerhalb des Reinraums 20 angeordnet sind, sondern auch hier lediglich diejenigen Bereiche, in denen tatsächlich die Behältnisse geführt werden. Insoweit könnte auch die Befüllungseinrichtung in ähnlicher Weise aufgebaut sein wie die Vorrichtung 1 zum Umformen von Kunststoffvorformlingen 10.

Wie erwähnt, ist der Reinraum 20 im Bereich der Vorrichtung 1 auf einen geringst möglichen Bereich reduziert, nämlich im Wesentlichen auf die Blasstationen 8 selbst. Durch diese kleinbauende Gestaltung des Reinraums 20 ist es leichter und schneller möglich, einen Reinraum überhaupt herzustellen und auch die Sterilhaltung in der Betriebsphase ist weniger aufwändig. Auch wird weniger Sterilluft benötigt, was zu kleineren Filteranlagen führt und auch die Gefahr von unkontrollierter Wirbelbildung wird reduziert.

Figur 2 zeigt eine Detaildarstellung der Vorrichtung 1 im Bereich einer Blasstation 8. Eine Vielzahl derartiger Blasstationen 8 wird mit einer Transporteinrichtung 2 bzw. einem Träger drehend um eine Achse X bewegt. Die Blasstation 8 ist, wie in Figur 2 ersichtlich, innerhalb des Reinraums 20, der hier kanalartig ausgebildet ist, geführt. Dieser Reinraum 20 wird abgeschlossen durch eine bewegliche Seitenwand 19 und einen einteilig mit dieser Seitenwand 19 ausgebildeten Deckel 17. Diese Seitenwand 19 und der Deckel 17 drehen dabei mit der Blasstation 8 mit.

Das Bezugszeichen 18 bezieht sich auf eine weitere Wandung, welche den Reinraum 20 begrenzt. Diese Wandung 18 ist hier eine außen liegende Wandung, welche stationär angeordnet ist. Zwischen dem Deckel 17 und der Wandung 18 ist eine Dichtungseinrichtung 25 vorgesehen, welche die gegeneinander beweglichen Elemente 17 und 18 gegeneinander abdichtet, beispielsweise, wie oben erwähnt, unter Verwendung eines Wasserschlosses. Der untere Bereich der Wandung 18 ist fest und abdichtend an einem Boden 13 angeordnet. Innerhalb des Reinraums 20 und hier unmittelbar an der Wandung 19 anliegend ist ein Träger 26 vorgesehen, der sich ebenfalls drehend bewegt und an dem wiederum eine Halteeinrichtung 23 vorgesehen ist, welche die Blasstation 8 hält.

Das Bezugszeichen 11 bezieht sich auf eine Folgeeinrichtung, welche von einer Führungskurve 9 betätigt werden kann, um die Blasstation auf ihrem Weg durch den Reinraum 20 zu öffnen und zu schließen, um insbesondere den Kunststoffvorformling in die Blasstation einzulegen und um ihn auch wieder zu entnehmen. Dabei ist eine Führungskurve 9 auch innerhalb des Reinraums 20 angeordnet. Es wäre jedoch beispielsweise auch möglich, etwa bereits einen Abschnitt 11 unterhalb der einzelnen Blasstationen 8 aus dem Reinraum 20 herauszuführen.

Die Transporteinrichtung 2 kann noch weitere Elemente aufweisen, welche oberhalb des Reinraums 20 angeordnet sind.

Der Träger 26 ist dabei fest auf einem Haltekörper 29 angeordnet und dieser Haltekörper ist wiederum beweglich gegenüber dem Boden 13. Dabei bezieht sich das Bezugszeichen 27 auf eine weitere Dichtungseinrichtung, welche auch in diesem Bereich eine Abdichtung der gegeneinander beweglichen Bereiche 13 und 29 bewirkt.

Das Bezugszeichen 5 bezieht sich auf eine Reckstange, welche gegenüber der Blasstation beweglich ist, um die Kunststoffvorformlinge 10 in ihrer Längsrichtung zu recken. Dabei ist auf dem Deckel 17 hier ein Schlitten 12 angeordnet, demgegenüber die Reckstange in der Richtung Y beweglich ist. Das Bezugszeichen 21 bezieht sich auf eine weitere Halterung für diesen Schlitten 12 der Reckstange 5.

Man erkennt, dass bestimmte Bereiche der Reckstange während des Blasvorgangs sowohl außerhalb des Reinraums 20 als auch innerhalb des Reinraums 20 sind. Zu diesem Zweck ist es möglich, außerhalb des Reinraums 20 bzw. oberhalb des Schlittens 12 eine Schutzeinrichtung wie einen Faltenbalg vorzusehen, der die Reckstange 5 umgibt, so dass kein Bereich der Reckstange 5 unmittelbar mit der Außenumgebung in Berührung kommt. Das Bezugszeichen U kennzeichnet die (unsterile) Umgebung des Reinraums 20. Das Bezugszeichen 28 kennzeichnet einen Träger zum Tragen einer Bodenform, welche ebenfalls einen Bestandteil der Blasform 4 ausbildet. Dieser Träger ist dabei ebenfalls in der Richtung Y bewegbar.

Das Bezugszeichen 55 bezieht sich auf eine Sterilisationseinrichtung, welche hier bevorzugt im Inneren des Reinraums 20 angeordnet ist und zum Sterilisieren der einzelnen Umformungsstationen bzw. Bestandteilen dieser Umformungsstationen 8 dient. Diese Sterilisationseinrichtung 55 kann dabei die Umformungsstationen 8 beispielsweise mit Wasserstoffperoxid oder einem anderen Sterilisationsmittel beaufschlagen. Dabei kann die Sterilisationseinrichtung 55 stationär angeordnet sein und die Umformungsstationen können sich gegenüber dieser Sterilisationseinrichtung 55 bewegen. Diese Sterilisationseinrichtung bzw. Beaufschlagungseinrichtung 55 kann sich am Transportrad 2 oder an der stehenden Wandung 18 befinden oder generell stationär angeordnet sein und aus Düsen o ähnlichem bestehen. Zudem ist es vorteilhaft, Sterilluft zum Sterilisieren des Reinraums 20 über das Lüftungssystem in den Reinraum 20 einzubringen.

Die (nicht gezeigten) Blasformen bzw. Blasformeinrichtungen sind innerhalb der Blasformträger 6 angeordnet. Genauer können dabei zwei Blasformträgerteile angeordnet sein, die gegenüber einander schwenkbar sind und jeweils ein Blasformteil halten. Durch diesen Schwenkvorgang können die Blasformen zum Einbringen von Kunststoffvorformlingen und zum Entnehmen fertig geblasener Behältnisse geöffnet werden. Diese Blasformträger und Blasformen sind dabei ebenfalls innerhalb des Reinraums angeordnet.

Es wäre jedoch auch (anders als in Fig. 2 gezeigt) möglich und bevorzugt, dass die Transporteinrichtung 2 bzw. der Träger einen C-förmigen Außenumfang aufweist, der auch teilweise die Außenwandungen des Reinraums ausbildet. Damit dreht sich hier diese C - förmige Reinraumwand mit der Transporteinrichtung 2 d.h. dem Blasrad. Bei dieser Ausführungsform ist die untere Begrenzung des Reinraums von dem Boden 13 beabstandet und bewegt sich relativ zu dem Boden. Auf diese Weise kann der Reinraum noch kleiner gestaltet werden als in Fig.2 gezeigt. Eine Abdichtung dieses C- förmigen Profils der Transporteinrichtung, welches hier sowohl eine Innenwandung als auch eine untere und obere Abdeckung des Reinraums ausbildet, findet hier bevorzugt nur gegenüber der Außenwandung des Reinraums statt. Diese Außenwandung ist dabei vorteilhaft stationär angeordnet.

Das Bezugszeichen 14 kennzeichnet grob schematisch eine Beaufschlagungseinrichtung, welche die Kunststoffvorformlinge mit der Blasluft beaufschlagt. Dabei kann diese Beaufschlagungseinrichtung eine Blasdüse aufweisen, welche an einen Mündungsrand des Kunststoffvorformlinge ansetzbar ist und somit auch abdichtend eine Beaufschlagung desselben mit Blasluft ermöglicht. Das Bezugszeichen 15 kennzeichnet, grob schematisch einen Ventilblock, der eine Vielzahl von Ventileinrichtungen (in Fig. 2 nicht gezeigt) aufweist, um die Zuführung der Blasluft an die Kunststoffvorformlinge zu steuern. Diese Ventileinrichtungen sind dabei bevorzugt in der obigen Weise ausgeführt. Die hier beschriebenen Ventileinrichtungen sind jedoch bevorzugt auch Bestandteil der Beaufschlagungseinrichtung.

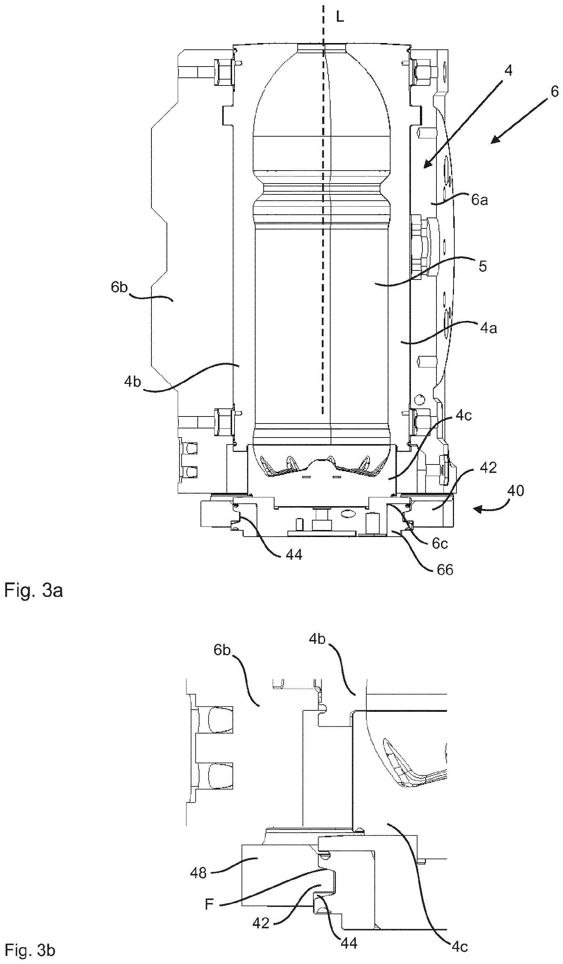

Die Figuren 3a und 3b zeigen eine Blasformanordnung nach dem Stand der Technik. Dabei bezieht sich das Bezugszeichen 4 in seiner Gesamtheit auf eine Blasformeinrichtung. Diese Blasformeinrichtung weist dabei zwei Blasformteile bzw. Seitenteile 4a und 4b auf. Daneben weist die Blasformeinrichtung ein Bodenteil 4c auf. Diese Seitenteile sowie das Bodenteil bilden zusammen den Hohlraum 7 aus, innerhalb dessen die Kunststoffvorformlinge durch Beaufschlagung mit Druckluft zu den Kunststoffbehältnissen, insbesondere gegen eine Innenwand der einzelnen Blasformteile, expandiert werden. Das Bezugszeichen L kennzeichnet eine Längsrichtung der (nicht gezeigten) zu expandierenden Kunststoffvorformlinge. Gleichzeitig bezeichnet das Bezugszeichen L jedoch auch eine Längsrichtung der Blasformeinrichtung.

Das Bezugszeichen 6 kennzeichnet eine Trägereinrichtung, welche zum Halten der Blasformeinrichtung dient. Diese Trägereinrichtung weist dabei wiederum zwei Trägerteile 6a, 6b auf, an denen die beiden Blasformteile 4a und 4b lösbar angeordnet sind. Zum Öffnen und Schließen der Blasformeinrichtung 4 können diese beiden Trägerteile 6a, 6b geschwenkt werden und zwar insbesondere bezüglich einer Schwenkachse, welche parallel zu der Längsrichtung L verläuft. Vorteilhaft handelt es sich hierbei im Betrieb um eine vertikal liegende Schwenkachse. Auch die Drehachse des Transportrads bzw. Blasrads, an dem die einzelnen Umformungsstationen angeordnet sind, ist bevorzugt parallel zu dieser Längsrichtung angeordnet.

Das Bezugszeichen 6c kennzeichnet ein Trägerteil, welches zum Halten des Bodenteils 4c dient.

Das Bezugszeichen 40 kennzeichnet in seiner Gesamtheit einen Zentriermechanismus, der zum Zentrieren des Trägerteils 6c und damit auch des daran angeordneten Bodenteils 4c gegenüber den Seitenteilen 4a und 4b der Blasformeinrichtung dient.

Zu diesem Zweck sind sowohl rechts- als auch linksseitig des Trägerteils 6c Eingriffsmittel vorgesehen, welche als entsprechend angepasste Eingriffsmittel des Bodenteils 6c dienen. Im Einzelnen greifen dabei Vorsprünge 42 der in ihrer Gesamtheit mit 48 bezeichneten Zustellkörper in Ausnehmungen 44, welche an den Bodenträgerteil 6c angeordnet sind, ein. Auf diese Weise wird das Trägerteil 6c und damit auch das Bodenteil 4c in der Figur nach unten hin abgestützt, um so den hohen Drücken während des Blasvorgangs standzuhalten.

Fig. 3b zeigt eine Detaildarstellung der Darstellung aus Fig. 3a. Man erkennt hier insbesondere die Ausgestaltung des Vorsprungs 42 sowie der Ausnehmung 44. Man erkennt, dass zwischen dem Vorsprung 42 und der Ausnehmung 44 eine Kontaktfläche F gebildet wird, welche hier schräg verläuft. Durch diesen schrägen Verlauf kann bei einer Zustellung des Gegenstücks 48 auf das Trägerteil 6c bzw. einen Bodenzentrierring 66, der an diesem Teil angeordnet ist, die Bodenform nach oben gedrängt werden. Andererseits treten jedoch durch diese Ausgestaltung auch die eingangs beschriebenen Abnutzungserscheinungen des Vorsprungs bzw. der Ausnehmung auf. Daher sind im Stand der Technik an diesen Stellen Schmiermittel erforderlich, welche jedoch insbesondere bei sterilen Anwendungen störend sind.

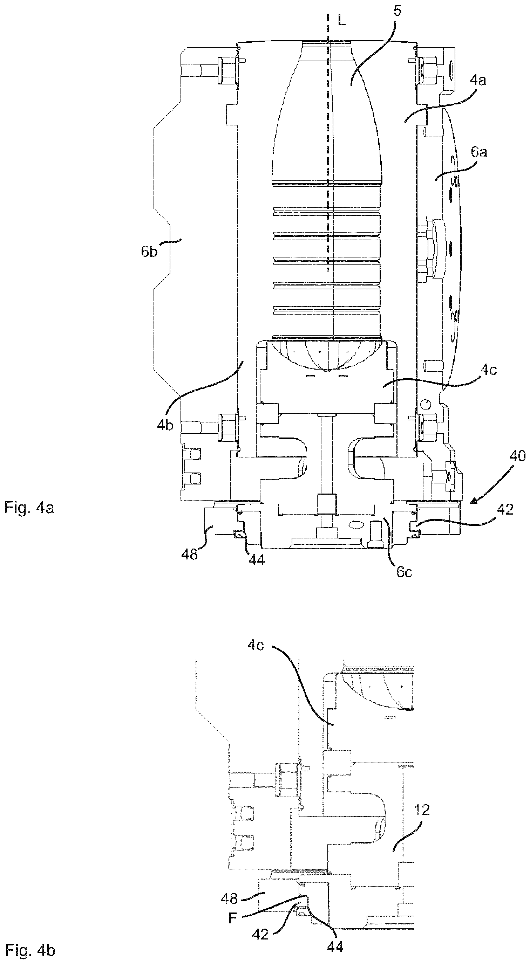

Die Figuren 4a und 4b zeigen eine erfindungsgemäße Blasformeinrichtung. Diese entspricht teilweise der bereits in den Figuren 3a und 3b gezeigten Vorrichtung, sodass im Folgenden lediglich auf die Unterschiede eingegangen wird. Diese lassen sich am besten an Fig. 4b erläutern. Während bei der in Fig. 3d gezeigten Darstellung die Kontaktfläche F schräg verläuft, erkennt man bei der in Fig. 4b gezeigten Darstellung, dass diese Kontaktfläche genau horizontal verläuft bzw. genau senkrecht zu der oben erwähnten Längsrichtung L. Auf diese Weise ist es möglich, während des Schließvorgangs den Vorsprung 42 derart in die Ausnehmung 44 einzuführen, dass zumindest kein Kontakt entlang der Kontaktfläche zwischen dem Vorsprung 42 und der Ausnehmung 44 auftritt. Bevorzugt ist jedoch der Vorsprung 42 gegenüber der Ausnehmung 44 derart ausgebildet, dass keinerlei Kontakt zwischen dem Vorsprung 42 und der Ausnehmung 44 während einer Schließbewegung und bevorzugt auch nicht während einer Öffnungsbewegung der Blasformeinrichtung 4 auftritt. Auf diese Weise kann jegliche Abnutzung während des Schließ- bzw. auch während des Öffnungsvorgangs verhindert werden.

Man erkennt, dass die Ausnehmung 44 nicht unmittelbar an dem Botenträgerteil 6c ausgebildet ist, sondern an einem Zentrierring 66, der wiederum fest an dem Bodenträgerteil 6c angeordnet ist. Bei der in Fig. 4b gezeigten Zustand ist diejenige Situation dargestellt, in der beispielsweise ein Blasformvorgang stattfinden kann. Hier wird die Kontaktfläche F ausgebildet, weil das Bodenteil 4c nach unten, insbesondere durch die im Inneren des Hohlraums bzw. des Kunststoffvorformlings bestehenden Blasdruck, eine Kraft nach unten auf das Bodenteil 4c ausgeübt wird.

Zwischen der Oberfläche 42c des Vorsprungs, welche der Oberfläche 42a gegenüberliegt und der Oberfläche 44c der Ausnehmung, welche ebenfalls der Oberfläche 44a gegenüber liegt, tritt bei der in Fig. 4b gezeigten Situation kein Kontakt auf. Bevorzugt treten diese Beiden Oberflächen niemals in Kontakt miteinander.

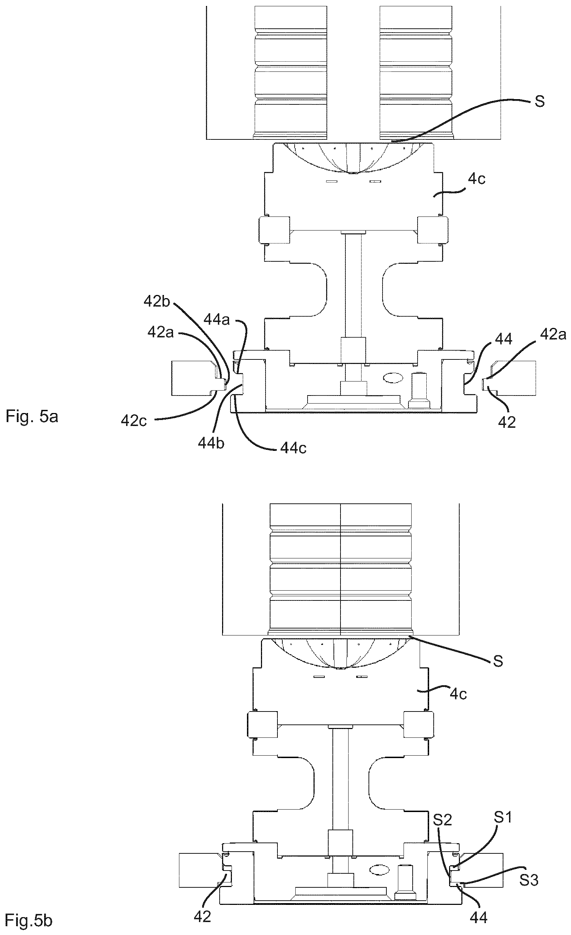

Die Figuren 5a bis 5d veranschaulichen einen Ablauf bei der Expansion von Kunststoffvorformlingen. Bei der in Fig. 5a gezeigten Ausgangssituation wurde das Bodenteil 4c in Richtung der Seitenteile zugestellt. Die Vorsprünge 42 greifen hierbei noch nicht in die Ausnehmungen 44 ein. Ein entsprechender Formträger ist bei dieser Situation noch ebenso wie die beiden Seitenteile 4a und 4b der Blasformeinrichtung geöffnet. Zwischen den Seitenteilen 4a und 4b sowie den Bodenteil 4c ist in dieser Situation ein Formspalt S ausgebildet, der hier eine Spaltbreite im Bereich von 0,1 mm aufweist.

Ein entsprechender Formspalt würde hier auch zwischen einer Oberfläche 42a des Vorsprungs und einer hierzu korrespondierenden Oberfläche 44a der Ausnehmung auftreten, wenn keine weitere Höhenverstellung des Bodenteils erfolgen würde.

Bei der in Fig. 5b gezeigten Situation wurde die Blasform geschlossen, was an den beiden Seitenteilen 4a und 4b erkennbar ist. Gleichzeitig fahren die beiden Vorsprünge 42 in die jeweiligen Ausnehmungen 44 ein. Da in dieser Situation der Blasformvorgang noch nicht begonnen hat, besteht nach wie vor ein Formspalt S mit einer Spaltbreite von 0,1 mm. Ein entsprechender Spalt S1 von ca. 0,1 mm besteht hier auch zwischen den oben genannten Flächen 42a und 44a des Vorsprungs 42 und der Ausnehmung 44. Es wird nochmal darauf hingewiesen, dass die Ausnehmung hier den Vorsprung 42 vollständig umgibt, dies wäre jedoch nicht unbedingt nötig, vielmehr könnte die Ausnehmung auch als Stufe ausgestaltet sein. Entscheidend sind jedoch die jeweilige Fläche 44a bzw. 42a, die später zur Abstützung des Bodenteils 4c dienen.

Das Bezugszeichen S2 bezieht sich auf einen Spalt, der zwischen der Oberfläche 42b des Vorsprungs und der Oberfläche 44b der Ausnehmung besteht. Bevorzugt sind die Ausnehmung 44 und der Vorsprung 42 derart ausgebildet, dass zu keinem Zeitpunkt ein Kontakt zwischen diesen Flächen 42b und 44b besteht.

Das Bezugszeichen S3 bezieht sich auf einen Spalt, der zwischen der Oberfläche 42c des Vorsprungs und der Oberfläche 44c der Ausnehmung besteht. Bevorzugt sind die Ausnehmung 44 und der Vorsprung 42 derart ausgebildet, dass zu keinem Zeitpunkt ein Kontakt zwischen diesen Flächen 42c und 44c besteht.

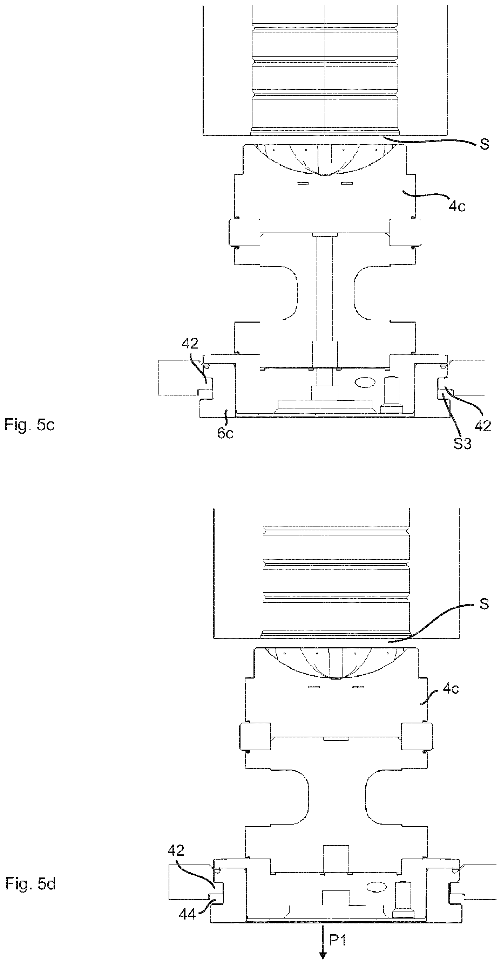

Bei der in Fig. 5c gezeigten Ausgestaltung wird gerade ein Blasformvorgang durchgeführt. Aufgrund des Blasdruckes wird das Bodenteil 4c mit einer Kraft beaufschlagt und bewegt sich geringfügig nach unten. Auf diese Weise vergrößert sich der Formspalt S auf eine Spaltbreite von ca. 0,2 mm und andererseits schließt sich der Spalt S1 zwischen der Ausnehmung bzw. deren Oberfläche 44a und dem Vorsprung 42 bzw. dessen Oberfläche 42a. Damit wird nunmehr das Bodenteil nach unten hin abgestützt und kann sich nicht noch weiter von den Blasformteilen 4a, 4b entfernen.

Fig. 5d veranschaulicht diesen Zustand, in dem nunmehr auf das Bodenteil 4c bedingt durch den Blasformvorgang, eine Blaskraft wirkt, welche das Bodenteil 4c, wie durch den Pfeil P gezeigt, nach unten drückt.

Nach Beendigung des Blasformvorgangs (nicht gezeigt) wird bevorzugt das Bodenteil 4c wieder geringfügig nach oben angehoben, sodass der Formspalt S wieder auf 0,1 mm reduziert wird und andererseits wieder ein Formspalt zwischen der Oberfläche 42a und der Oberfläche 44a entsteht. Damit besteht in dieser Situation kein Kontakt mehr zwischen dem Vorsprung 42 und der Ausnehmung 44. Die Blasformeinrichtung kann nunmehr ohne Reibung zwischen dem Vorsprung 42 und der Ausnehmung 44 geöffnet werden.

Auf diese Weise kann auch auf die im Stand der Technik nötige Schmierung verzichtet werden.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 2: Transportrad
- 4: Blasformeinrichtung
- 4a, 4b: Seitenteile
- 4c: Bodenteil
- 5: Reckstange
- 6: Trägereinrichtung
- 6a, 6b: Trägerteile
- 6c: Bodenträgerteil
- 7: Hohlraum
- 8: Blas-/Umformungsstationen
- 9: Führungskurve
- 10: Kunststoffvorformlinge
- 10a: Behältnisse
- 11: Folgeeinrichtung
- 12: Schlitten
- 13: Boden
- 14: Beaufschlagungseinrichtung
- 15: Ventilblock
- 17: Deckel
- 18: weitere Wandung
- 19: Seitenwand
- 20: Reinraum
- 21: Halterung für Schlitten
- 22: Zuführeinrichtung
- 23: Halteeinrichtung
- 24: Abführeinrichtung
- 25: Dichtungseinrichtung
- 26: Träger
- 27: weitere Dichtungseinrichtung
- 28: Träger zum Tragen einer Bodenform
- 29: Haltekörper
- 30: Heizeinrichtung
- 31: Heizelemente
- 32: Sterilisationseinrichtung
- 34: Transporteinrichtung
- 36: Übergabeeinheit
- 37: Transportrad
- 40: Zentriermechanismus
- 42: Vorsprünge
- 42a,b,c: Oberflächen der Vorsprünge
- 44: Ausnehmungen
- 44a, b,: c Oberflächen der Ausnehmungen
- 48: Zustellkörper
- 50: Anlage zum Herstellen von Kunststoffbehältnissen
- 55: Sterilisationseinrichtun
- 66: Zentrierring
- 80: Befüllungseinrichtung
- 82: Übergabeeinheit
- 84: Transporteinheit

- L: Längsrichtung
- F: Kontaktfläche
- S: Formspalt
- S1: Spalt zwischen Vorsprung 42 und Ausnehmung 44
- S2, S3: weitere Spalte
- P1: Druck nach unten

## Patentansprüche

1. Vorrichtung (1) zum Umformen von Kunststoffvorformlingen (10) zu Kunststoffbehältnissen (10a) mit einer Blasformeinrichtung (4), welche einen Hohlraum (7) ausbildet, innerhalb dessen die Kunststoffvorformlinge (10) zu den Kunststoffbehältnissen (10a) expandierbar sind, wobei die Blasformeinrichtung (4) ein erstes Blasformteil (4a) und ein zweites Blasformteil (4b) sowie ein Bodenteil (4c) aufweist, welche bezüglich einander beweglich sind, um die Blasformeinrichtung (4) zu öffnen oder zu schließen, mit einer Blasformträgereinrichtung (6) zum Halten der Blasformeinrichtung (4), wobei die Blasformträgereinrichtung (6) ein erstes Trägerteil (6a) zum Halten des ersten Blasformteils (4a) und ein zweites Trägerteil (6b) zum Halten des zweiten Blasformteils (4b) aufweist, und wobei die Vorrichtung weiterhin ein drittes Trägerteil (6c) zum Halten des Bodenteils (4c) aufweist, und wobei die Vorrichtung einen Zentriermechanismus (40) aufweist, um das Bodenteil (4c) wenigstens zeitweise gegenüber den Blasformteilen (4a, 4b) zu zentrieren, wobei dieser Zentriermechanismus (40) ein erstes als Vorsprung ausgebildetes Eingriffselement (42) aufweist, welches bezüglich eines zweiten als Ausnehmung ausgebildeten Eingriffselements (44) bewegbar ist und eines dieser Eingriffselemente an dem dritten Trägerteil (6c) angeordnet ist, wobei weiterhin die Ausnehmung (44) und der Vorsprung (42) derart ausgebildet sind, dass der Vorsprung (42) bei einer Zustellbewegung in die Ausnehmung (44) eingreifen kann, wobei wenigstens zeitweise während eines Umformungsvorgangs die Eingriffselemente (42, 44) über eine erste Kontaktfläche (F) in Kontakt stehen, wobei durch diesen Kontakt das Bodenteil (4c) in einer Längsrichtung (L) der Kunststoffvorformlinge (10) abgestützt wird,
**dadurch gekennzeichnet, dass**
die Eingriffselemente (42, 44) derart angeordnet sind, dass sie zumindest zeitweise während einer Schließbewegung der Blasformeinrichtung (4) nicht entlang der Kontaktfläche (F) miteinander in Kontakt gelangen, wobei während des Umformungsvorgangs zwischen wenigstens einem Seitenteil (4a, 4b) und dem Bodenteil (4c) ein Formspalt (S) besteht, der sich quer zu der Längsrichtung (L) der Kunststoffvorformlinge erstreckt.

2. Vorrichtung (1) nach Anspruch 1,
**dadurch gekennzeichnet, dass**
das Bodenteil wenigstens zeitweise während einer Schließbewegung der Blasformeinrichtung näher an den Seitenteilen angeordnet ist als während des Umformungsvorgangs.

3. Vorrichtung (1) nach wenigstens einem der vorangegangenen Ansprüche,
**dadurch gekennzeichnet, dass**
die Vorrichtung (1) eine Antriebseinrichtung aufweist, um ein Eingriffselement (42) gegenüber dem anderen Eingriffselement (44) in der Längsrichtung (L) der Kunststoffvorformlinge (10) zu bewegen.

4. Vorrichtung (1) nach Anspruch 3,
**dadurch gekennzeichnet, dass**
die Antriebseinrichtung eine stationär angeordnete Führungskurve aufweist.

5. Vorrichtung (1) nach wenigstens einem der vorangegangenen Ansprüche,
**dadurch gekennzeichnet, dass**
die Kontaktfläche (F) zwischen den Eingriffselementen (42, 44) in einem geschlossenen Zustand der Blasformeinrichtung (4) in einer im Wesentlichen horizontalen Richtung verläuft.

6. Vorrichtung (1) nach wenigstens einem der vorangegangenen Ansprüche,
**dadurch gekennzeichnet, dass**
sich ein Eingriffsbereich der Eingriffselemente (42, 44) bezüglich einer Längsrichtung (L) der Kunststoffvorformlinge entlang eines Umfangswinkels erstreckt, der kleiner ist als 150°.

7. Vorrichtung (1) nach zumindest einem der vorhergehenden Ansprüche,
**dadurch gekennzeichnet, dass**
der Formspalt (S) eine Breite aufweist, die größer ist als 0,1mm und bevorzugt größer als 0,2mm.

8. Verfahren zum Umformen von Kunststoffvorformlingen (10) zu Kunststoffbehältnissen (10a), wobei die Kunststoffvorformlinge in eine Blasformeinrichtung (4) eingebracht und in dieser Blasformeinrichtung (4) durch Beaufschlagung mit einem fließfähigen Medium zu den Kunststoffbehältnissen (10a) umgeformt werden, wobei die Blasformeinrichtung (4) wenigstens ein erstes Blasformteil (4a), ein zweites Blasformteil (4b) und ein Bodenteil (4c) aufweist, welche gemeinsam einen Hohlraum (7) ausbilden, innerhalb dessen die Kunststoffvorformlinge (10) zu den Kunststoffbehältnissen ausgebildet werden, wobei für einen Schließvorgang der Blasformeinrichtung die an Trägerteilen (6a, 6b) angeordneten Blasformteile (4a, 4b) aufeinander zugestellt werden, wobei weiterhin das Bodenteil (4c) gegenüber den Blasformteilen (4a, 4b) zentriert wird, wobei für diesen Zentriervorgang ein erstes als Vorsprung ausgebildetes Eingriffselement (42) bezüglich eines zweiten als Ausnehmung ausgebildeten Eingriffselements (44) bewegt wird und eines dieser Eingriffselemente an einem dritten Trägerteil (6c) angeordnet ist, welches zum Halten des Bodenteils (6c) dient, wobei weiterhin die Ausnehmung (44) und der Vorsprung (42) derart ausgebildet sind, dass der Vorsprung (42) bei einer Zustellbewegung in die Ausnehmung (44) eingreift, wobei wenigstens zeitweise während eines Umformungsvorgangs die Eingriffselemente (42, 44) über eine erste Kontaktfläche (F) in Kontakt stehen und durch diesen Kontakt das Bodenteil (4c) in einer Längsrichtung der Kunststoffvorformlinge (10) abgestützt wird,
**dadurch gekennzeichnet, dass**
die Eingriffselemente (42, 44) zumindest zeitweise während einer Schließbewegung der Blasformeinrichtung nicht entlang der Kontaktfläche (F) miteinander in Kontakt gelangen, wobei während des Umformungsvorgangs zwischen wenigstens einem Seitenteil (4a, 4b) und dem Bodenteil (4c) ein Formspalt (S) besteht, der sich quer zu der Längsrichtung (L) der Kunststoffvorformlinge erstreckt.

9. Verfahren nach Anspruch 8,
**dadurch gekennzeichnet, dass**
ein Abstand zwischen dem Bodenteil (4c) und den Blasformteilen (4a, 4b) nach Beginn eines Schließvorgangs der Blasformeinrichtung und vor dem Beginn eines Öffnungsvorgangs der Blasformeinrichtung wenigstens zeitweise vergrößert wird.

10. Verfahren nach Anspruch 9,
**dadurch gekennzeichnet, dass**
die Eingriffselemente (42,44) nach Beginn eines Schließvorgangs der Blasformeinrichtung und vor dem Beginn eines Öffnungsvorgangs der Blasformeinrichtung bezüglich einander in einer Längsrichtung der zu expandierenden Kunststoffvorformlinge bewegt werden.

## Claims

1. An apparatus (1) for the shaping of plastics material preforms (10) into plastics material containers (10a) with a blow mould device (4) which forms a cavity (7) inside which the plastics material preforms (10) are capable of being expanded to form the plastics material containers (10a), wherein the blow mould device (4) has a first blow mould part (4a) and a second blow mould part (4b) as well as a base part (4c), which are movable relative to one another in order to open or to close the blow mould device (4), with a blow mould carrier device (6) for holding the blow mould device (4), wherein the blow mould carrier device (6) has a first carrier part (6a) for holding the first blow mould part (4a) and a second carrier part (6b) for holding the second blow mould part (4b), and wherein, in addition, the apparatus has a third carrier part (6c) for holding the base part (4c), and wherein the apparatus has a centring mechanism (40) in order to centre the base part (4c) at least for a time with respect to the blow mould parts (4a, 4b), wherein this centring mechanism (40) has a first engagement element (42) which is designed in the form of a projection and which is movable with respect to a second engagement element (44) designed in the form of a recess, and one of these engagement elements is arranged on the third carrier part (6c), wherein, in addition, the recess (44) and the projection (42) are designed in such a way that during a feed movement the projection (42) can engage in the recess (44), wherein the engagement elements (42, 44) are in contact by way of a first contact face (F) at least for a time during a shaping procedure, wherein the base part (4c) is supported by this contact in a longitudinal direction (L) of the plastics material preforms (10),
**characterized in that**
the engagement elements (42, 44) are arranged in such a way that they do not come into contact with each other along the contact face (F) at least for a time during a closing movement of the blow mould device (4), wherein a mould gap (S), which extends transversely to the longitudinal direction (L) of the plastics material preforms, is present between at least one lateral part (4a, 4b) and the base part (4c) during the shaping procedure.

2. An apparatus (1) according to claim 1,
**characterized in that**
the base part is arranged closer to the lateral parts at least for a time during a closing movement of the blow mould device than during the shaping procedure.

3. An apparatus (1) according to at least one of the preceding claims, **characterized in that**
the apparatus (1) has a drive device in order to move one engagement element (42) with respect to the other engagement element (44) in the longitudinal direction (L) of the plastics material preforms (10).

4. An apparatus (1) according to claim 3,
**characterized in that**
the drive device has a guide cam which is arranged so as to be stationary.

5. An apparatus (1) according to at least one of the preceding claims,
**characterized in that**
in a closed state of the blow mould device (4) the contact face (F) between the engagement elements (42, 44) extends in a substantially horizontal direction.

6. An apparatus (1) according to at least one of the preceding claims,
**characterized in that**
an engagement area of the engagement elements (42, 44) extends along a peripheral angle - which is less than 150° - with respect to a longitudinal direction (L) of the plastics material preforms.

7. An apparatus (1) according to at least one of the preceding claims,
**characterized in that**
the mould gap (S) has a width which is greater than 0.1 mm and preferably greater than 0.2 mm.

8. A method of shaping plastics material preforms (10) into plastics material containers (10a), wherein the plastics material preforms are introduced into a blow mould device (4) and in this blow mould device (4) they are shaped into the plastics material containers (10a) by being acted upon with a flowable medium, wherein the blow mould device (4) has at least one first blow mould part (4a), one second blow mould part (4b) and a base part (4c), which jointly form a cavity (7) inside which the plastics material preforms (10) are formed into the plastics material containers, wherein the blow mould parts (4a, 4b) arranged on the carrier parts (6a, 6b) are advanced one after the other for a closing procedure of the blow mould device, wherein, in addition, the base part (4c) is centred with respect to the blow mould parts (4a, 4b), wherein for this centring procedure a first engagement element (42) designed in the form of a projection is moved with respect to a second engagement element (44) designed in the form of a recess and one of these engagement elements is arranged on a third carrier part (6c) which is used for holding the base part (4c), wherein, in addition, the recess (44) and the projection (42) are designed in such a way that the projection (42) engages in the recess (44) during a feed movement, wherein the engagement elements (42, 44) are in contact by way of a first contact face (F) at least for a time during a shaping procedure and the base part (4c) is supported by this contact in a longitudinal direction of the plastics material preforms (10),
**characterized in that**
the engagement elements (42, 44) are not in contact with each other along the contact face (F) at least for a time during a closing movement of the blow mould device, wherein a mould gap (S), which extends transversely to the longitudinal direction (L) of the plastics material preforms, is present between at least one lateral part (4a, 4b) and the base part (4c) during the shaping procedure.

9. A method according to claim 8,
**characterized in that**
a distance between the base part (4c) and the blow mould parts (4a, 4b) is increased at least for a time after the start of the closing procedure of the blow mould device and before the start of an opening procedure of the blow mould device.

10. A method according to claim 9,
**characterized in that**
the engagement elements (42, 44) are moved with respect to each other in a longitudinal direction of the plastics material preforms to be expanded after the start of a closing procedure of the blow mould device and before the start of an opening procedure of the blow mould device.

## Revendications

1. Appareil (1) de transformation d'ébauches en matière plastique (10) en récipients en matière plastique (10a), comprenant un dispositif de moule de soufflage (4), lequel forme une cavité (7) à l'intérieur de laquelle les ébauches en matière plastique (10) peuvent être mises en expansion pour obtenir les récipients en matière plastique (10a), dans lequel le dispositif de moule de soufflage (4) comprend une première partie de moule de soufflage (4a) et une deuxième partie de moule de soufflage (4b) ainsi qu'une partie inférieure (4c), lesquelles sont mobiles les unes par rapport aux autres afin d'ouvrir ou de fermer le dispositif de moule de soufflage (4), comprenant un dispositif de support de moule de soufflage (6) destiné à retenir le dispositif de moule de soufflage (4), dans lequel le dispositif de support de moule de soufflage (6) comprend une première partie de support (6a) destinée à retenir la première partie de moule de soufflage (4a) et une deuxième partie de support (6b) destinée à retenir la deuxième partie de moule de soufflage (4b), et dans lequel l'appareil comprend en outre une troisième partie de support (6c) destinée à retenir la partie inférieure (4c), et dans lequel l'appareil comprend un mécanisme de centrage (40), afin de centrer la partie inférieure (4c) au moins temporairement par rapport aux parties de moule de soufflage (4a, 4b), dans lequel ce mécanisme de centrage (40) comprend un premier élément de mise en prise (42) réalisé sous la forme d'une partie saillante, lequel est mobile par rapport à un deuxième élément de mise en prise (44) réalisé sous la forme d'un évidement et l'un de ces éléments de mise en prise est agencé sur la troisième partie de support (6c), dans lequel l'évidement (44) et la partie saillante (42) sont réalisés en outre de telle manière que la partie saillante (42), lors d'un mouvement d'avance, peut s'insérer dans l'évidement (44), dans lequel les éléments de mise en prise (42, 44) sont en contact sur toute l'étendue d'une première surface de contact (F) au moins temporairement pendant une procédure de transformation, dans lequel la partie inférieure (4c), à la suite de ce contact, est en appui dans une direction longitudinale (L) des ébauches en matière plastique (10),
**caractérisé en ce que**
les éléments de mise en prise (42, 44) sont agencés de telle sorte qu'ils ne parviennent pas en contact les uns avec les autres le long de la surface de contact (F) au moins temporairement pendant un mouvement de fermeture du dispositif de moule de soufflage (4), dans lequel une fente de formage (S) qui s'étend transversalement à la direction longitudinale (L) des ébauches en matière plastique est présente entre au moins une partie latérale (4a, 4b) et la partie inférieure (4c) pendant la procédure de transformation.

2. Appareil (1) selon la revendication 1,
**caractérisé en ce que**
la partie inférieure est agencée plus près des parties latérales au moins temporairement pendant un mouvement de fermeture du dispositif de moule de soufflage que pendant la procédure de transformation.

3. Appareil (1) selon au moins l'une des revendications précédentes,
**caractérisé en ce que**
le dispositif (1) comprend un dispositif d'entraînement pour déplacer un élément de mise en prise (42) par rapport à l'autre élément de mise en prise (44) dans la direction longitudinale (L) des ébauches en matière plastique (10).

4. Appareil (1) selon la revendication 3,
**caractérisé en ce que**
le dispositif d'entraînement présente une came de guidage montée fixe.

5. Appareil (1) selon au moins l'une des revendications précédentes,
**caractérisé en ce que**
la surface de contact (F) entre les éléments de mise en prise (42, 44) s'étend dans une direction sensiblement horizontale une fois le dispositif de moule de soufflage (4) fermé.

6. Appareil (1) selon au moins l'une des revendications précédentes,
**caractérisé en ce que**
une zone de mise en prise des éléments de mise en prise (42, 44) s'étend par rapport à une direction longitudinale (L) des ébauches en matière plastique le long d'un angle périphérique qui est inférieur à 150°.

7. Appareil (1) selon au moins l'une des revendications précédentes,
**caractérisé en ce que**
la fente de formage (S) présente une largeur qui est supérieure à 0,1 mm et de préférence supérieure à 0,2 mm.

8. Procédé de transformation d'ébauches en matière plastique (10) en récipients en matière plastique (10a), dans lequel les ébauches en matière plastique (10) sont introduites dans un dispositif de moule de soufflage (4) et, dans ce dispositif de moule de soufflage (4), transformées en récipients en matière plastique (10a) par exposition à un milieu fluide, dans lequel le dispositif de moule de soufflage (4) comprend au moins une première partie de moule de soufflage (4a), une deuxième partie de moule de soufflage (4b) et une partie inférieure (4c), lesquelles forment conjointement une cavité (7) à l'intérieur de laquelle les ébauches en matière plastique (10) sont transformées en récipients en matière plastique, dans lequel les parties de moule de soufflage (4a, 4b) agencées sur les parties de support (6a, 6b) sont rapprochées l'une de l'autre pour une procédure de fermeture du dispositif de moule de soufflage, dans lequel la partie inférieure (4c) est en outre centrée par rapport aux parties de moule de soufflage (4a, 4b), dans lequel un premier élément de mise en prise (42) réalisé sous la forme d'une partie saillante est déplacé par rapport à un deuxième élément de mise en prise (44) réalisé sous la forme d'un évidement pour cette procédure de centrage et l'un de ces éléments de mise en prise est agencé sur une troisième partie de support (6c), laquelle sert à retenir la partie inférieure (6c), dans lequel l'évidement (44) et la partie saillante (42) sont en outre réalisés de telle manière que la partie saillante (42), lors d'un mouvement d'avance, s'insère dans l'évidement (44), dans lequel les éléments de mise en prise (42, 44) sont en contact sur toute l'étendue d'une première surface de contact (F) au moins temporairement pendant une procédure de transformation et, à la suite de ce contact, la partie inférieure (4c) est en appui dans une direction longitudinale des ébauches en matière plastique (10),
**caractérisé en ce que**
les éléments de mise en prise (42, 44) ne parviennent pas en contact les uns avec les autres le long de la surface de contact (F) au moins temporairement pendant un mouvement de fermeture du dispositif de moule de soufflage, dans lequel une fente de formage (S) qui s'étend transversalement à la direction longitudinale (L) des ébauches en matière plastique est présente entre au moins une partie latérale (4a, 4b) et la partie inférieure (4c) pendant la procédure de transformation.

9. Procédé selon la revendication 8,
**caractérisé en ce que**
un écart entre la partie inférieure (4c) et les parties de moule de soufflage (4a, 4b), après le démarrage d'une procédure de fermeture du dispositif de moule de soufflage et avant le démarrage d'une procédure d'ouverture du dispositif de moule de soufflage, est augmenté au moins temporairement.

10. Procédé selon la revendication 9,
**caractérisé en ce que**
les éléments de mise en prise (42, 44), après le démarrage d'une procédure de fermeture du dispositif de moule de soufflage et avant le démarrage d'une procédure d'ouverture du dispositif de moule de soufflage, sont déplacés l'un par rapport à l'autre dans une direction longitudinale des ébauches en matière plastique à mettre en expansion.
